# EUROPEAN PATENT APPLICATION

(11) **EP 4 684 974 A1**
(43) Date of publication of application: **28.01.2026**
(21) Application number: 25188605.7
(22) Date of filing: 09.07.2025
(51) Int. Cl.: B41J 2/21, G06K 15/10, H04N 1/00, H04N 1/405

(54) **PRINTING APPARATUS AND PRINTING METHOD**

(30) Priority: 11.07.2024 JP 2024111758
(71) Applicant: Seiko Epson Corporation, Tokyo 160-8801 (JP)
(72) Inventor: KAKUTANI, Toshiaki, Suwa-shi, 392-8502 (JP)
(74) Representative: Lewis Silkin LLP

(57) **Abstract**

A printing apparatus includes a halftone processing section that uses a dither mask to determine whether or not to form a dot in each of a plurality of pixels constituting an output image based on an input gradation value of an original image, and a head unit that forms the output image on a medium based on a processing result of the halftone processing section, in which a direction in which a plurality of heads discharge a liquid is set as a first direction, a direction in which the medium is transported is set as a second direction, a direction orthogonal to the first direction and the second direction is set as a third direction, the output image includes a mixed region and a single region, a length of the mixed region in the third direction is a first length, a length of the single region in the third direction is a second length, and the number of elements of the dither mask in the third direction is N times or 1/N times a total number of the number of pixels corresponding to the first length and the number of pixels corresponding to the second length.

## Description

The present application is based on, and claims priority from JP Application Serial Number 2024-111758, filed July 11, 2024, the disclosure of which is hereby incorporated by reference herein in its entirety.

### BACKGROUND

### 1. Technical Field

The present disclosure relates to a printing apparatus and a printing method.

### 2. Related Art

In a technique of discharging a liquid onto a medium to perform printing, a gradation is expressed by a distribution of dots. In such a distribution of dots, blue noise characteristics and green noise characteristics are provided to eliminate bias in the distribution of dots, and thus image quality is improved. When such dots are formed, a plurality of dot groups may be overlapped in a predetermined region. For example, in a large printer in which a plurality of print heads having a predetermined length are arranged, two print heads may be disposed such that end portions thereof overlap, and thus a group of dots formed by a nozzle row of one print head and a group of dots formed by a nozzle row of the other print head may overlap.

When an image is formed with the overlap of such groups of dots, graininess reduction or density variation occurs when dot formation positions between the groups deviate from normal positions at a time of design, and thus the image quality is significantly deteriorated. In order to solve such a problem, the present applicant has proposed a technique of generating a dither mask in which a decrease in image quality is within a predetermined range even when a deviation occurs in the dot formation positions between groups, a method for image processing or printing using the dither mask, and the like, for example, in JP-A-2007-245618 and JP-A-2013-103437 described below.

These techniques significantly improve printing quality by reducing the influence of the positional deviation when a plurality of head scans or a plurality of nozzle rows are caused to overlap in the same region to be used. As a method of implementing the techniques, these characteristics are incorporated into a threshold value arrangement of the dither mask at the time of creating the dither mask used in a halftone step. However, when these techniques are employed for a printer having two or more overlapping regions, further improvement is required in the following points. When a plurality of mixed regions in which dots are formed by overlapping scanning of the plurality of nozzle rows (regions in which there may be a deviation in a dot disposition formed for each scanning) are present and one dither mask is repeatedly used, a relative positional relationship between each mixed region and the dither mask changes for each mixed region. For this reason, the expected effect of the dither mask may not be obtained, and there is room for examination of a size of the dither mask.

### SUMMARY

According to an aspect of the present disclosure, there is provided a printing apparatus that forms an output image corresponding to an original image on a medium, the printing apparatus including: a halftone processing section that uses a dither mask to determine whether or not to form a dot in each of a plurality of pixels constituting the output image based on an input gradation value of the original image; and a head unit that includes a plurality of heads including a first head, a second head, and a third head, and causes the plurality of heads to discharge a liquid based on a processing result of the halftone processing section to form the output image on the medium, in which a direction in which the plurality of heads discharge the liquid to the medium is set as a first direction, a direction in which the medium is transported and that is orthogonal to the first direction is set as a second direction, a direction orthogonal to the first direction and the second direction is set as a third direction, the plurality of heads are disposed side by side in the third direction in order from the first head, a plurality of nozzles included in a rear end portion of a first nozzle row included in the first head overlap with a plurality of nozzles included in a front end portion of a second nozzle row included in the second head when viewed from the second direction, a plurality of nozzles included in a rear end portion of the second nozzle row overlap with a plurality of nozzles included in a front end portion of a third nozzle row included in the third head when viewed from the second direction, the output image includes a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and a single region in which a plurality of dots are formed by the liquid discharged from a plurality of nozzles included between the front end portion and the rear end portion of the second nozzle row, a length of the mixed region in the third direction is a first length, a length of the single region in the third direction is a second length, and the number of elements of the dither mask in the third direction is N times or 1/N times a total number of the number of pixels corresponding to the first length and the number of pixels corresponding to the second length, where N is a natural number.

According to another aspect of the present disclosure, there is provided a printing method of forming an output image corresponding to an original image on a medium, the printing method including: performing halftone processing of using a dither mask to determine whether or not to form a dot in each of a plurality of pixels constituting the output image based on an input gradation value of the original image; and causing a plurality of heads including a first head, a second head, and a third head to discharge a liquid based on a result of the halftone processing to form the output image on the medium, in which a direction in which the plurality of heads discharge the liquid to the medium is set as a first direction, a direction in which the medium is transported and that is orthogonal to the first direction is set as a second direction, a direction orthogonal to the first direction and the second direction is set as a third direction, the plurality of heads are disposed side by side in the third direction in order from the first head, a plurality of nozzles included in a rear end portion of a first nozzle row included in the first head overlap with a plurality of nozzles included in a front end portion of a second nozzle row included in the second head when viewed from the second direction, a plurality of nozzles included in a rear end portion of the second nozzle row overlap with a plurality of nozzles included in a front end portion of a third nozzle row included in the third head when viewed from the second direction, the output image includes a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and a single region in which a plurality of dots are formed by the liquid discharged from a plurality of nozzles included between the front end portion and the rear end portion of the second nozzle row, a length of the mixed region in the third direction is a first length, a length of the single region in the third direction is a second length, and the number of elements of the dither mask in the third direction is N times or 1/N times a total number of the number of pixels corresponding to the first length and the number of pixels corresponding to the second length, where N is a natural number.

### BRIEF DESCRIPTION OF THE DRAWINGS

FIG. 1 is a schematic configuration diagram of a printing apparatus.
FIG. 2 is a flowchart diagram showing a procedure of a printing method.
FIG. 3 is a block diagram showing a configuration of a printer.
FIG. 4 is a cross-sectional view of a main section of the printer.
FIG. 5 is a diagram showing an example of an arrangement of nozzles on a bottom surface of a head module.
FIG. 6 is an explanatory diagram conceptually illustrating a part of the dither mask.
FIG. 7 is an explanatory diagram showing an idea of on/off of dot formation using the dither mask.
FIG. 8 is a diagram showing an example of actual grouping and virtual grouping for an output image according to a first embodiment.
FIG. 9 is a diagram showing an example of a size of the dither mask.
FIG. 10 is a diagram showing an example of actual grouping and virtual grouping for an output image according to a second embodiment.
FIG. 11 is a diagram showing a relationship between a deviation in disposing a second head and actual use nozzles and surplus nozzles according to a third embodiment.
FIG. 12 is a diagram showing a modification example in which nozzle rows are disposed in a staggered shape.
FIG. 13 is a diagram showing a modification example in which the nozzle rows are disposed obliquely with respect to a main scanning direction.
FIG. 14 is a diagram showing a modification example in which the nozzle rows are disposed obliquely and in a staggered shape.

### DESCRIPTION OF EMBODIMENTS

Hereinafter, preferred embodiments of the present disclosure will be described with reference to drawings. The drawings are used for convenience of description. The embodiments to be described below do not inappropriately limit the contents of the present disclosure described in the claims. Further, not all of configurations to be described below are necessarily essential components of the present disclosure.

### 1. First Embodiment

### 1-1. Configuration of Printing Apparatus

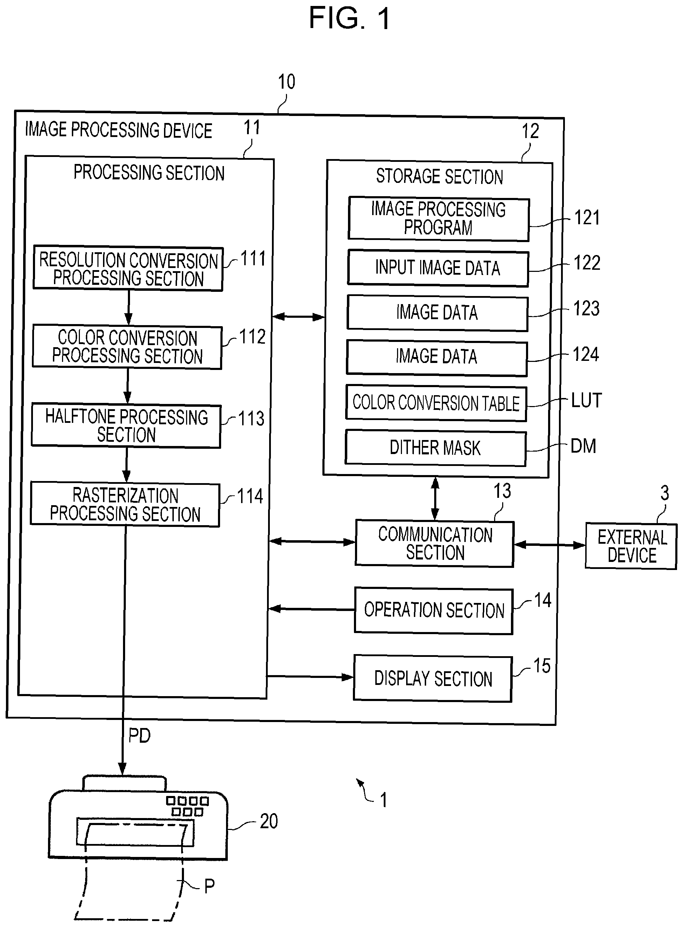

FIG. 1 is a block diagram showing a configuration of a printing apparatus 1 according to a first embodiment. As shown in FIG. 1, the printing apparatus 1 includes an image processing device 10 that processes an original image to output data of an output image and a printer 20 that can form a full-color image, and forms an output image corresponding to the original image on a medium P. As shown in FIG. 1, the image processing device 10 processes input image data to generate print data PD, and outputs the print data PD to be transferred to the printer 20. The image processing device 10 is, for example, a personal computer, and can be coupled to an external device 3, such as a digital camera, a memory card, and a USB flash drive, via various ports (not shown), and can be coupled to the external device 3, such as various servers or information terminals, via a network. The image processing device 10 acquires the input image data from the external device 3, for example. The printer 20 forms the output image corresponding to the input image data on the medium P based on the print data PD. The printer 20 is, for example, an ink jet printer that can form the full-color image.

As shown in FIG. 1, the image processing device 10 includes a processing section 11, a storage section 12, a communication section 13, an operation section 14, and a display section 15. The image processing device 10 may have a configuration in which a part of the components in FIG. 1 is omitted or changed, or another component is added.

The processing section 11 acquires the input image data to perform image processing. Specifically, the processing section 11 executes an image processing program 121 stored in the storage section 12 to perform the image processing on input image data 122 stored in the storage section 12. The input image data 122 is, for example, RGB image data. In addition, the processing section 11 performs various types of processing in response to an operation signal from the operation section 14, processing of causing the display section 15 to display various images, processing of controlling the communication section 13 to perform data communication with the external device 3, and the like. The processing section 11 is formed of, for example, a central processing unit (CPU) or a digital signal processor (DSP).

With the execution of the image processing program 121, the processing section 11 functions as a resolution conversion processing section 111, a color conversion processing section 112, a halftone processing section 113, and a rasterization processing section 114. That is, the image processing device 10 includes the resolution conversion processing section 111, the color conversion processing section 112, the halftone processing section 113, and the rasterization processing section 114.

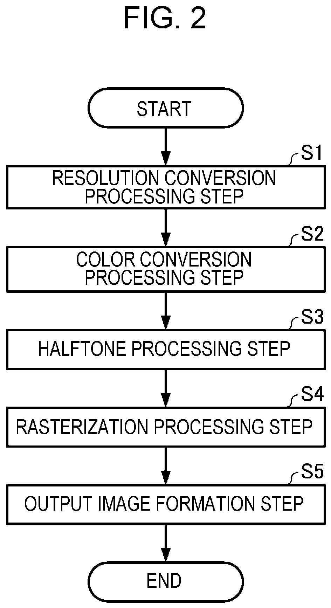

FIG. 2 is a flowchart diagram showing a procedure of a printing method using the printing apparatus 1. In FIG. 2, first, in a resolution conversion processing step S1, the processing section 11 of the image processing device 10 functions as the resolution conversion processing section 111 to perform processing of converting a resolution (that is, the number of pixels per unit length) of the input image data 122, which is the RGB image data, into a resolution at which the printer 20 can print.

Next, in a color conversion processing step S2, the processing section 11 functions as the color conversion processing section 112 to convert the input image data 122 subjected to the resolution conversion into multi-gradation data of a plurality of ink colors that can be used by the printer 20 with reference to a color conversion table LUT stored in the storage section 12. The multi-gradation data is stored, as image data 123, in the storage section 12. The number of gradations of the image data 123 is, for example, 256, and each pixel of the image data 123 has any one of gradation values of 0 to 255.

Next, in a halftone processing step S3, the processing section 11 functions as the halftone processing section 113 to convert the image data 123 into image data 124 having a smaller number of gradations. In the present embodiment, the halftone processing section 113 executes, by using a dither mask DM stored in the storage section 12, halftone processing of generating the image data 124 for determining whether or not to form a dot in each of a plurality of pixels constituting the output image, based on the gradation value of the original image corresponding to the image data 123. The image data 124 is stored in the storage section 12. When a size of the dot that can be formed by the printer 20 is one type, the halftone processing is binarization processing of forming/not forming a dot, and the number of gradations of the image data 124 is two. Further, when two types of dots of small and large can be formed, the halftone processing is three-value processing of none, small, and large, and the number of gradations of the image data 124 is three. Further, when three types of ink dots of small, medium, and large can be formed, the halftone processing is four-value processing of none, small, medium, and large, and the number of gradations of the image data 124 is four. In the following, description will be made that each head module 41 can form one type of dot, and the image processing device 10 performs the binarization processing as the halftone processing. Details of the halftone processing will be described below.

Next, in a rasterization processing step S4, the processing section 11 functions as the rasterization processing section 114 to rearrange the image data 124 subjected to the halftone processing in order of data required to be transferred to the printer 20 and output the rearranged image data to the printer 20 as final print data PD. The print data PD includes raster data indicating a dot recording state at a time of each piece of main scanning and data indicating a sub-scanning feed amount.

Finally, in an output image formation step S5, the printer 20 forms the output image on the medium P based on the print data PD. The print data PD corresponds to the image data 124, which is a result of the halftone processing. Therefore, with discharge of a liquid from a plurality of heads, based on the result of the halftone processing, the printer 20 forms the output image on the medium P.

As shown in FIG. 1, the storage section 12 has a read only memory (ROM) and a random access memory (RAM) (not shown). The ROM stores various programs such as the image processing program 121, the color conversion table LUT, and data set in advance such as the dither mask DM, and the RAM stores the input image data 122 acquired via the communication section 13. The RAM is also used as a work area of the processing section 11, and stores a program or data read out from the ROM, data input from the operation section 14, the image data 123 and the image data 124 generated by the processing section 11, and the like.

The communication section 13 performs various types of control to cause data communication between the processing section 11 and the external device 3 to be established. Further, the communication section 13 acquires the input image data 122 from the external device 3 and stores the acquired input image data 122 in the storage section 12.

The operation section 14 is an input device configured with an operation key, a button switch, or the like, and outputs the operation signal in response to an operation by a user to the processing section 11.

The display section 15 is a display device configured with a liquid crystal display (LCD) or the like, and displays various images based on a display signal output from the processing section 11. A touch panel that functions as the operation section 14 may be provided on the display section 15. For example, the display section 15 displays information regarding various states of the image processing device 10.

At least a part of the resolution conversion processing section 111, the color conversion processing section 112, the halftone processing section 113, and the rasterization processing section 114 may be formed by dedicated hardware. Further, a part of information stored in the storage section 12, or a part of the resolution conversion processing section 111, the color conversion processing section 112, the halftone processing section 113, and the rasterization processing section 114 may be provided in the printer 20. For example, the printer 20 may receive the image data that is not subjected to the halftone processing from the image processing device 10, perform the halftone processing on the image data, and then perform printing processing.

### 1-2. Printer Configuration

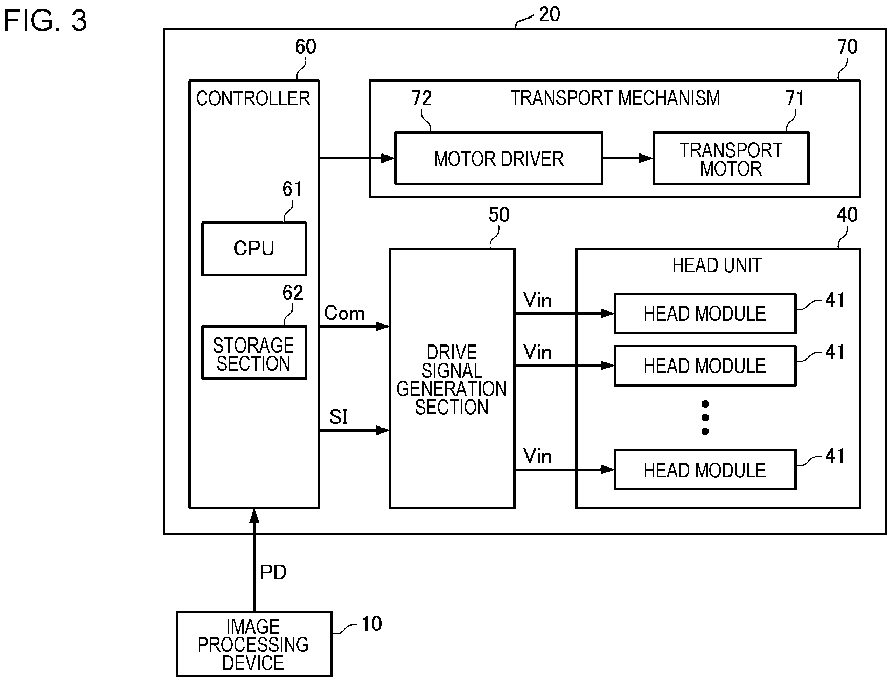

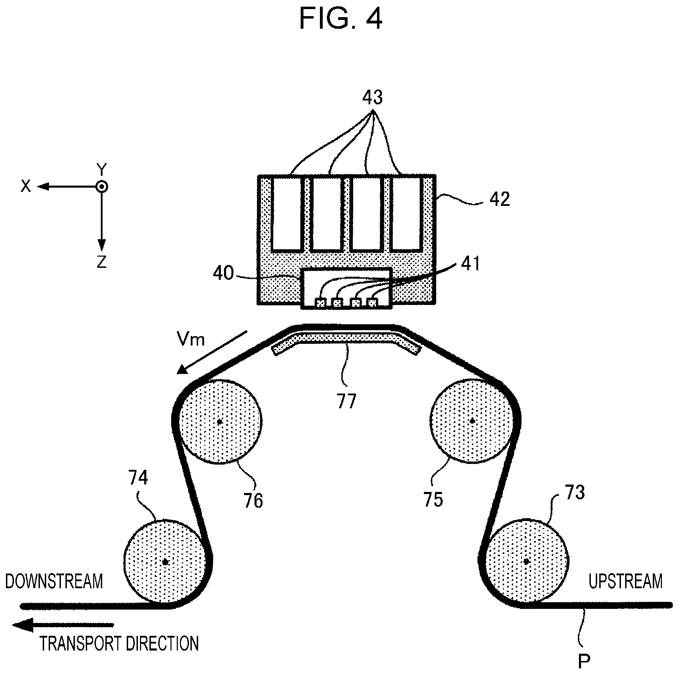

Next, a configuration of the printer 20 according to the present embodiment will be described with reference to FIGS. 3 and 4. As shown in FIG. 3, the printer 20 includes a head unit 40 that discharges a droplet, a drive signal generation section 50 that drives the head unit 40, a transport mechanism 70 that transports the medium P for printing, and a controller 60 that executes various types of processing.

The head unit 40 includes M head modules 41. In the present embodiment, M is a natural number of four or more, but M is one, that is, the number of head modules 41 may be one. The drive signal generation section 50 generates and outputs a drive signal Vin for driving the head unit 40. The transport mechanism 70 changes a relative position of the medium P to the head unit 40. The controller 60 controls the operation of each part of the printer 20 such as the head unit 40 or the drive signal generation section 50.

As shown in FIG. 4, in the present embodiment, the printer 20 is a line printer, and discharges the droplet to the medium P transported by the transport mechanism 70, from the head unit 40, to form an image on the medium P. That is, the head unit 40 is a line head. As shown by arrows X, Y, and Z in FIG. 4, in the following description, a first direction in which the head module 41 of the head unit 40 discharges the liquid is set as a Z direction, a second direction in which the medium P is transported, which is orthogonal to the Z direction, is set as an X direction, and a third direction orthogonal to the Z direction and the X direction is set as a Y direction. A direction from an upstream toward a downstream of the medium P in the X direction is referred to as a +X direction, a direction from a right side (back side of paper surface) toward a left side (front side of paper surface), when the medium P to be transported is viewed from the +X direction, in the Y direction is referred to as a +Y direction, and a direction from the head unit 40 toward the medium P in the Z direction is referred to as a +Z direction. A -X direction, a -Y direction, and a -Z direction are respectively directions opposite to the +X direction, the +Y direction, and the +Z direction. These directions are displayed as appropriate in another drawing as necessary. Since the medium P moves in the +X direction with respect to the head unit 40, the ink dots formed at the medium P are sequentially arranged from the downstream to the upstream on the medium P as the printing proceeds.

The transport mechanism 70 that transports the medium P from the upstream to the downstream includes a transport motor 71 that is a drive source for the transport, and a motor driver 72 for driving the transport motor 71. Further, as shown in FIG. 4, the transport mechanism 70 includes a platen 77 provided on a lower side of the head unit 40 (in the +Z direction in FIG. 3), transport rollers 73 and 74 that rotate by an operation of the transport motor 71, and guide rollers 75 and 76 that are driven by the rotation of the transport roller 73 and 74. The medium P is transported in the +X direction in the drawing (from the upstream to the downstream), along a transport path defined by the transport roller 73, the guide roller 75, the platen 77, the guide roller 76, and the transport roller 74.

The printer 20 includes a carriage 42 to accommodate the head unit 40 including the M head modules 41 in the carriage 42. In addition to the head unit 40, the carriage 42 houses the drive signal generation section 50 (not shown in FIG. 4) and four ink cartridges 43. The carriage 42 is disposed on a side opposite to the platen 77 with the transport path of the medium P therebetween, that is, on an upper side of the platen 77 (-Z direction).

The four ink cartridges 43 are provided in one-to-one correspondence with four colors of yellow, cyan, magenta, and black, and each ink cartridge 43 is filled with ink of a color corresponding to the ink cartridge 43. Each of the M head modules 41 receives ink supply from any one of the four ink cartridges 43. Each head module 41 fills the inside thereof with the ink supplied from the ink cartridge 43, and discharges the filled ink toward the medium P as the droplet. Accordingly, the four colors of ink as a whole can be discharged from the M head modules 41, and thus full-color printing is realized. Since a mechanism of discharging the droplet and the like are well known, the description thereof will be omitted.

The printer 20 according to the present embodiment includes four ink cartridges 43 corresponding to the four colors of ink, but the present disclosure is not necessarily limited to the four colors of ink. The printer 20 may include three or less or five or more ink cartridges 43 corresponding to three or less or five or more colors of ink. Further, the printer 20 may include the ink cartridges 43 filled with ink of colors different from the four colors, or may include only the ink cartridge 43 corresponding to a part of the four colors. That is, the printer 20 may be any printer that can discharge one or more colors of ink from the head module 41. Further, each ink cartridge 43 may be provided at another location of the printer 20, instead of being mounted on the carriage 42, and may supply the ink to each head module 41 of the head unit 40 by a tube or the like. The printer 20 may perform monochrome, for example, black only, printing. In the case, the head unit 40 may include a single head module 41.

In the printer 20, when the droplet is discharged from the head module 41, the medium P is transported by the transport mechanism 70 at a predetermined transport speed Vm in the +X direction. The droplet is discharged from a nozzle N of the head module 41, as the medium P is transported, to form the ink dot on the medium P, and thus the image is recorded on the medium P. That is, the image is recorded as a collection of ink dots formed by droplets discharged from respective nozzles N, which are arranged at a printing resolution in the Y direction. When focusing on one head module 41, the ink dots formed by the droplets discharged from the nozzles N of the head module 41 are arranged in a width direction (Y direction) of the medium P. For this reason, in such a line printer, the arrangement of the ink dots along the width direction of the medium P is referred to as "raster".

The controller 60 controls a timing of the transport of the medium P, a timing of the discharge of the droplets from each head module 41 of the head unit 40, and the like. Under the control of the controller 60, each head module 41 discharges the ink to the medium P, at a timing when the transport mechanism 70 transports the medium P to a desired position on the platen 77, to form the image on the medium P.

As shown in FIG. 3, the controller 60 controls the drive signal generation section 50, the transport mechanism 70, and the like, based on the image data 124 representing on/off of the dot that is included in the print data PD output from the image processing device 10, to form the image corresponding to the image data 124 on the medium P. Specifically, the controller 60 drives the transport motor 71 to send the long medium P in a transport direction (+X direction) via the control of the motor driver 72, and controls the presence or absence of the ink discharge from each head module 41 and the ink discharge timing via the control of the drive signal generation section 50. Accordingly, the controller 60 executes the printing processing of adjusting the disposition of the ink dots formed by the ink discharged onto the medium P to form, on the medium P, the image based on the image data 124.

The controller 60 includes a CPU 61 and a storage section 62. The storage section 62 temporarily stores data necessary when various types of processing are executed, such as the print data PD supplied from the image processing device 10. Further, the storage section 62 includes a random access memory (RAM) for temporarily developing a control program for executing various types of processing such as the printing processing, and a PROM for storing a control program for controlling each part of the printer 20, which is a type of non-volatile semiconductor memory.

The CPU 61 of the controller 60 generates signals such as a printing signal SI and a drive waveform signal Com for controlling the operation of the drive signal generation section 50 to cause each head module 41 to drive, based on various types of data such as the image data 124 stored in the storage section 62, and various signals such as a control signal for controlling the operation of the motor driver 72, based on various types of data stored in the storage section 62. In this manner, the controller 60 (CPU 61) generates various signals, such as the printing signal SI and the drive waveform signal Com, and supplies the various signals to each part of the printer 20 to comprehensively control the operation of each part of the printer 20, and thus various types of processing such as the printing processing are realized.

The halftone processing is the binarization processing of forming/not forming the ink dot when the size of the ink dot that can be formed by the droplets discharged by each head module 41 is one type, is the three-value processing of none, small, and large when two types of ink dots of small and large can be formed, and is the four-value processing of none, small, medium, and large when three types of ink dots of small, medium, and large can be formed. When the ink cartridge 43 contains light ink such as light magenta and light cyan, the halftone processing having a larger number of gradations can also be performed. In the present embodiment, each head module 41 can form one type of dot, and the image processing device 10 performs the binarization processing as the halftone processing. The CPU 61 may receive the image data that is not subjected to the halftone processing from the image processing device 10, perform the halftone processing on the image data, and then perform the printing processing.

The drive signal generation section 50 generates the drive signal Vin for driving each of the M head modules 41 included in the head unit 40, based on the printing signal SI and the drive waveform signal Com supplied from the controller 60. Details of the generation of these signals will be omitted.

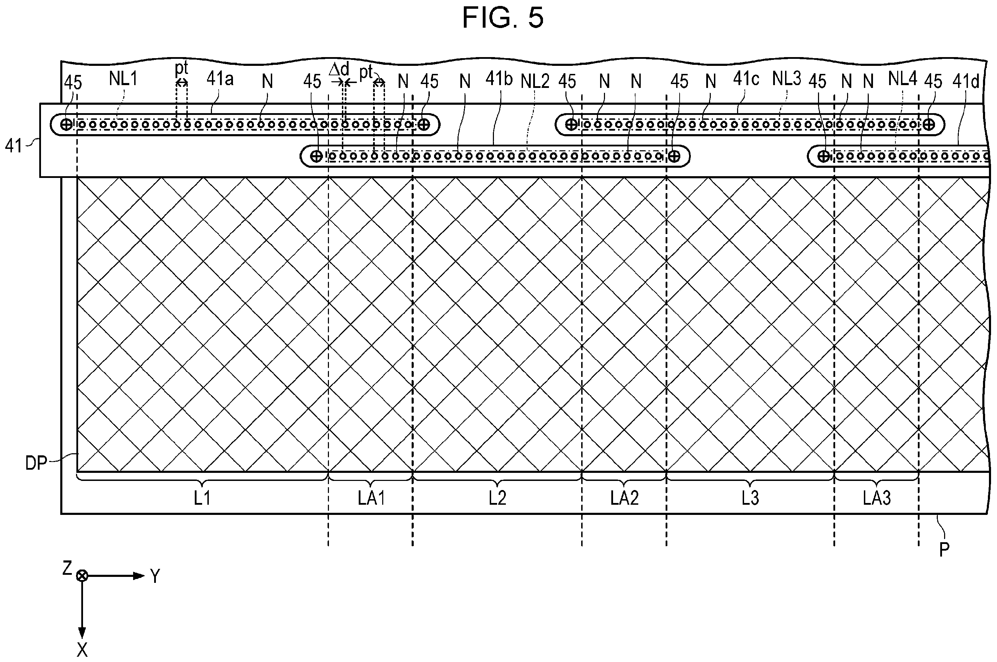

FIG. 5 is a diagram showing an example of an arrangement of the nozzles N on a bottom surface of one head module 41, and is a perspective view of the head module 41 viewed from the +Z direction. Since the printer 20 is the line printer, a width of each head module 41 in the Y direction is larger than a width of the medium P. However, in order to form the head module 41 that discharges the droplets over the width of the medium P, a plurality of short heads provided with a predetermined number of nozzles N are arranged to partially overlap in the X direction. For convenience of understanding, FIG. 5 shows only a first head 41a, a second head 41b, a third head 41c, and a fourth head 41d each having 32 nozzles N in the Y direction. The first head 41a, the second head 41b, the third head 41c, the fourth head 41d, and the like are positioned and fixed to the head unit 40 by a screw 45.

A pitch pt of the nozzles N in the Y direction, which are included in each of these heads, may be set as appropriate according to the printing resolution (dpi: dots per inch). The resolution of the printer 20 in the Y direction depends on a configuration of the head unit 40, specifically, a spacing of the arrangement of the nozzles N, and the resolution of the printer 20 in the X direction depends on a discharge interval of the droplets from the head module 41 and the transport speed of the medium P by the transport mechanism 70. The above pitch and resolutions can be freely set according to the design of the printer 20.

As shown in FIG. 5, the head module 41 includes a plurality of heads including the first head 41a, the second head 41b, the third head 41c, and the fourth head 41d that discharge the ink (liquid), and the plurality of heads discharge the ink (liquid), based on a processing result of the halftone processing section 113, to form the output image DP on the medium P. The plurality of heads including the first head 41a, the second head 41b, the third head 41c, and the fourth head 41d are disposed side by side in the Y direction at constant spacings in order from the first head 41a.

As shown in FIG. 5, when viewed from the X direction, the plurality of nozzles N included in a rear end portion (right end portion) of a first nozzle row NL1, which is included in the first head 41a, overlap the plurality of nozzles N included in a front end portion (left end portion) of a second nozzle row NL2, which is included in the second head 41b. Further, when viewed from the X direction, the plurality of nozzles N included in a rear end portion (right end portion) of the second nozzle row NL2 overlap the plurality of nozzles N included in a front end portion (left end portion) of a third nozzle row NL3, which is included in the third head 41c. Further, when viewed from the X direction, the plurality of nozzles N included in a rear end portion (right end portion) of the third nozzle row NL3 overlap the plurality of nozzles N included in a front end portion (left end portion) of a fourth nozzle row NL4, which is included in the fourth head 41d. In FIG. 5, two adjacent heads are alternately disposed, and eight nozzles N at the end portions of respective nozzle rows are disposed to overlap each other when viewed from the X direction. In an actual head module 41, the number of nozzles N in each head is several hundred, and the number of overlapping nozzles N in two adjacent heads may be one hundred or more.

In the printer 20, the droplets are discharged from each nozzle N of the head module 41, as the transport mechanism 70 transports the medium P, to form the ink dots on the medium P. Thus, the printer 20 forms the output image DP on the medium P. That is, the output image DP is formed as a collection of the ink dots formed by the droplets discharged from each nozzle N, which are arranged in the Y direction. Therefore, the output image DP includes a single region L1 in which a plurality of dots are formed only by the ink discharged from the first head 41a, and a mixed region LA1 in which a plurality of dots are formed by the ink discharged from the first head 41a and the ink discharged from the second head 41b. Further, the output image DP includes a single region L2 in which a plurality of dots are formed only by the ink discharged from the second head 41b, and a mixed region LA2 in which a plurality of dots are formed by the ink discharged from the second head 41b and the ink discharged from the third head 41c. Further, the output image DP includes a single region L3 in which a plurality of dots are formed only by the ink discharged from the third head 41c, and a mixed region LA3 in which a plurality of dots are formed by the ink discharged from the third head 41c and the ink discharged from the fourth head 41d. In the output image DP, the arrangement of the ink dots along the width direction of the medium P is referred to as "raster".

In the single regions L1, L2, and L3, a spacing between the dots formed at the medium P is equal to the pitch pt between two adjacent nozzles N, and the dot spacing does not change. For example, when a maximum value of the printing resolution is 720 dpi, the pitch pt is 25.4 mm/720 ≈ 35 µm. On the contrary, in the mixed region LA1, since the dots formed by the first head 41a and the dots formed by the second head 41b are mixed, there is a deviation Δd on the disposition of the nozzle N of the first head 41a and the nozzle N of the second head 41b in dot formation positions. In FIG. 5, the deviation Δd is illustrated to be smaller than the pitch pt between two adjacent nozzles N, but the deviation Δd may be several times larger than the nozzle pitch pt depending on mechanical attachment accuracy of the first head 41a or the second head 41b. Further, in FIG. 5, the deviation Δd in the Y direction is shown, but the deviation in the X direction may also occur.

### 1-3. Halftone Processing

Hereinafter, the halftone processing of generating the image data 124, which is dot data, will be described. The halftone processing is performed by, for example, a systematic dither method using the dither mask DM that allows a dot disposition having excellent dispersibility.

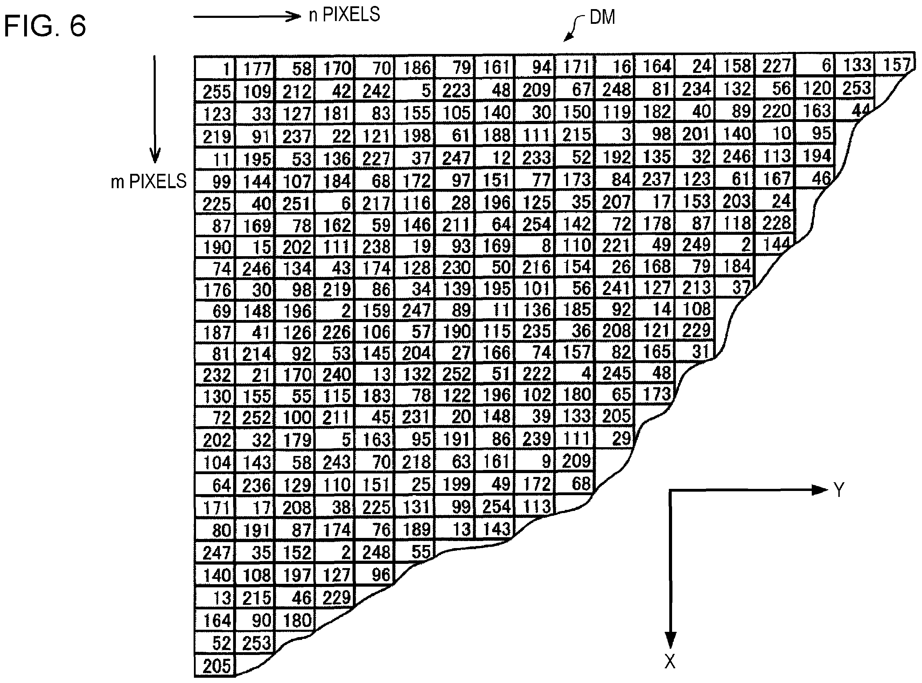

FIG. 6 is a diagram conceptually illustrating a part of the dither mask DM. As shown in FIG. 6, the dither mask DM stores threshold values selected from a range of the gradation values of 1 to 255 in a well-distributed manner, in a total of n × m elements of n elements in an arrangement direction (Y direction, hereinafter, also referred to as main scanning direction) of the plurality of nozzles N and m elements in a direction (X direction, hereinafter, also referred to as sub-scanning direction) intersecting the arrangement direction of the nozzles N. The dither mask DM is created in advance, and stored in the storage section 12.

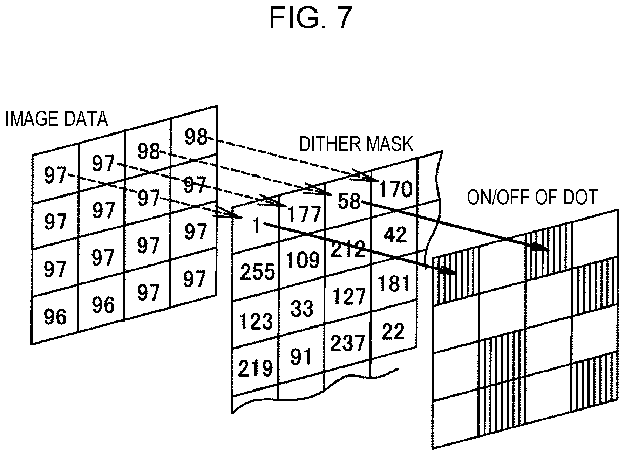

FIG. 7 is an explanatory diagram showing an idea of the presence or absence of the dot formation using the dither mask DM. For convenience of illustration, only some elements are illustrated. In determining the presence or absence of the dot formation, as shown in FIG. 7, the gradation value of the image data is compared with the threshold value stored at a corresponding position in the dither mask DM. The dot is formed when the gradation value of the image data is larger than the threshold value stored in the dither mask DM, and the dot is not formed when the gradation value of the image data is smaller than the threshold value. In the drawing, pixels with hatching means pixels in which dots are formed. In this manner, with the use of the dither mask DM, the presence or absence of the dot formation can be determined for each pixel, by the simple process of comparing the gradation value of the image data with the threshold value set in the dither mask DM. Therefore, gradation number conversion processing can be quickly implemented. Furthermore, as is clear from the fact that, when the gradation value of the image data is determined, whether or not the dot is formed in each pixel is determined solely by the threshold value set in the dither mask DM, in the systematic dither method, a dot formation situation or the dispersibility of formed dots can be controlled by a stored position of the threshold value set in the dither mask DM.

As described above, in the printer 20 of the present embodiment, the output image includes the single region in which only a single head is involved in the dot formation and the mixed region in which two heads are involved in the dot formation. In the example shown in FIG. 5, the dots are formed only by the first head 41a in the single region L1, the dots are formed by the first head 41a and the second head 41b in the mixed region LA1, and the dots are formed only by the second head 41b in the single region L2. In order to form the dots in each raster, the first head 41a is always used in the single region L1, and the second head 41b is always used in the single region L2. However, either the first head 41a or the second head 41b can be used in the mixed region LA1.

For example, for the plurality of pixels included in the mixed region, the dots may be formed by one head for half of the plurality of pixels and the dots may be formed by the other head for remaining half of the plurality of pixels.

As described above, since the first head 41a and the second head 41b are positioned and fixed by the screws 45 or the like, there is the deviation Δd on the disposition of the nozzle N of the first head 41a and the nozzle N of the second head 41b in the Y direction, as shown in FIG. 5. For this reason, in the mixed region LA1, since the dot formation positions deviate, when the dither mask DM is used in which the disposition of the threshold value used for the halftone processing by the dither method is simply made to have blue noise characteristics, graininess reduction or density variation in the image may occur. On the other hand, since the nozzle pitch pt of the first head 41a or the second head 41b is constant, the dot formation positions do not deviate in the single region L1 or the single region L2, and thus the graininess reduction or density variation does not occur. As a result, a large difference in the graininess or density occurs between the single regions L1 and L2 and the mixed region LA1, and thus a difference in image appearance occurs between the single regions L1 and L2 and the mixed region LA1, and the quality of the output image may deteriorate.

In the present embodiment, in order to reduce the difference in the graininess or density between the single region and the mixed region, the output image is virtually divided into a first pixel group and a second pixel group, and there is no correlation, in terms of the dispersibility, between characteristics of a distribution of the pixels in which the dots are formed in the first pixel group and characteristics of a distribution of the pixels in which the dots are formed in the second pixel group. The fact that there is no correlation in terms of the distribution of the pixels means that the disposition of the dots in one pixel group is not referenced in determining the disposition of the dots in the other pixel group. The two characteristics may be caused to have no correlation only when an input gradation value of the original image is an intermediate value or more, which is set in advance. This is because when the input gradation value is small, a distance between the dots is originally sufficiently separated and the overlapping of the dots due to the deviation does not occur.

In the mixed region, each pixel in which the dots are formed by one head is included in the first pixel group, and each pixel in which the dots are formed by the other head is included in the second pixel group. Further, the plurality of pixels included in the single region are divided into, for example, the first pixel group and the second pixel group by half.

The distribution of the pixels in which the dots are formed in the first pixel group may have the blue noise characteristics or green noise characteristics, and the distribution of the pixels in which the dots are formed in the second pixel group may have the blue noise characteristics or the green noise characteristics. With the blue noise characteristics or the green noise characteristics of the distribution of the pixels in which the dots are formed, the dispersibility of the dot disposition can be enhanced. Since the dispersibility can be enhanced particularly in a frequency region with high sensitivity of the human eye, the graininess of the output image is improved, and thus the quality of the output image can be improved.

That is, when the distributions of the pixels in which the dots are respectively formed in the first pixel group and the second pixel group have the blue noise characteristics or the green noise characteristics and there is no correlation between the distributions of the pixels in which the dots are respectively formed in the first pixel group and the second pixel group, in the mixed region, even when the deviation in the dot formation positions occurs in either the X direction or the Y direction, the graininess reduction or density variation is suppressed, and thus the quality of the output image can be improved.

Further, when a separation distance between a first pixel selected from the first pixel group and a second pixel selected from the second pixel group is equal to or less than at least an assumed deviation amount between the two pixel groups, a probability that the dots are simultaneously formed in a pair of the first pixel and the second pixel may be approximated to a value determined in accordance with the square of the input gradation value. With the above, even when there is a difference in the deviation between the formation positions of the dots formed corresponding to the first pixel group and the dots formed corresponding to the second pixel group in at least a part of the output image, the variation in the overlapping of the formed dots is suppressed, and thus a difference in density unevenness of the image is suppressed. The fact that there is no correlation between the dot formation positions of the first pixel group and the second pixel group is a sufficient condition of the present requirement. This is because when there is no correlation between the two pixels, the probability that the dots are simultaneously formed in the pair of the first pixel and the second pixel is the product of dot formation probabilities of the two pixels, that is, the square of the input gradation value when the two pixels have the same input gradation value. The method in which the probability that the dots are simultaneously formed in the pair of the first pixel and the second pixel is approximated to the value determined in accordance with the square of the input gradation value is disclosed in JP-A-2012-204939 and the like. Since the method is a well-known technique, a detailed description thereof will be omitted.

Further, for example, a dither mask DM1 consisting of the threshold value of the position corresponding to each pixel of the first pixel group and a dither mask DM2 consisting of the threshold value of the position corresponding to each pixel of the second pixel group may each have the blue noise characteristics or the green noise characteristics, and the two characteristics may be not correlated. For example, first, the dither mask DM1 for the first pixel group and the dither mask DM2 for the second pixel group may be separately created by using different initial settings or the like.

Hereinafter, a grouping of all the pixels included in the output image from the viewpoint of which head forms the dots is referred to as "actual grouping". Further, virtual division of all the pixels included in the output image into the first pixel group and the second pixel group is referred to as "virtual grouping". The actual grouping and the virtual grouping are performed according to a pattern set in advance.

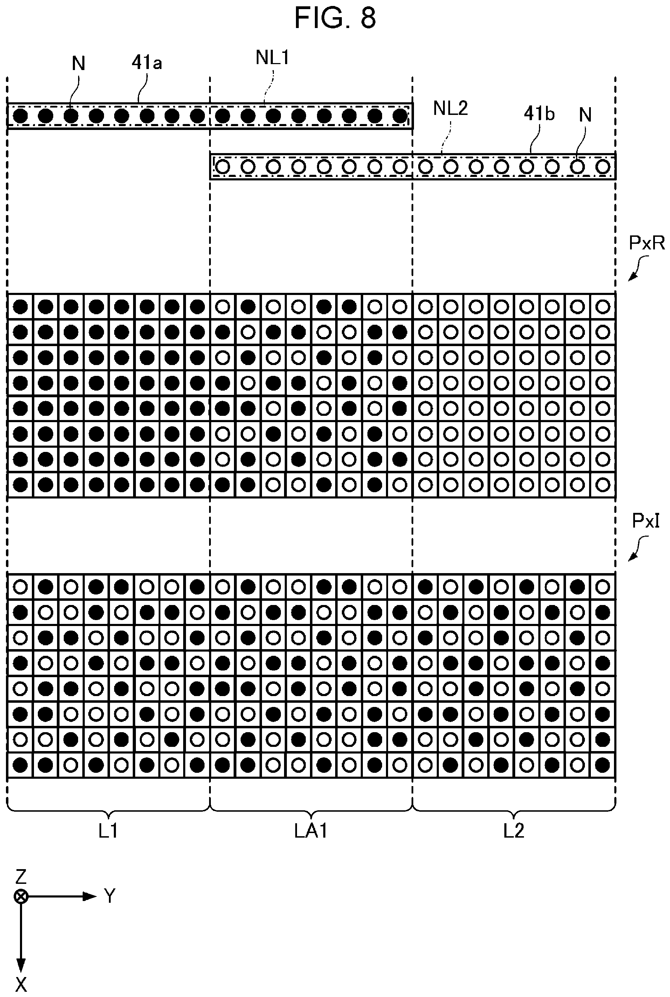

FIG. 8 is a diagram showing an example of the actual grouping and the virtual grouping for the output image. FIG. 8 schematically shows, in an upper part, a part of a first nozzle row NL1 of the first head 41a and a part of a second nozzle row NL2 of the second head 41b shown in FIG. 5, with 16 nozzles N from a right end of the first nozzle row NL1 indicated by black circles, and 16 nozzles N from a left end of the second nozzle row NL2 indicated by white circles. In FIG. 8, a middle PxR indicates a pattern of the actual grouping of a plurality of pixels in which the dots are formed by the nozzles N, and a lower Pxl indicates a pattern of the virtual grouping of the plurality of pixels. In the pattern PxR, the pixels in which the dots are formed by the first head 41a are indicated by black circles, and the pixels in which the dots are formed by the second head 41b are indicated by white circles. Further, in the pattern Pxl, the pixels included in the first pixel group are indicated by black circles, and the pixels included in the second pixel group are indicated by white circles.

In the example of FIG. 8, in the mixed region LA1, the pixels in which the dots are formed by the first head 41a and the pixels in which the dots are formed by the second head 41b are randomly disposed, as shown by the pattern PxR. Further, in the mixed region LA1, the pixels included in the first pixel group and the pixels included in the second pixel group are randomly disposed in the same pattern as the pattern PxR, as shown by the pattern Pxl. That is, in the mixed region LA1, each pixel in which the dots are formed by the first head 41a is included in the first pixel group, and each pixel in which the dots are formed by the second head 41b is included in the second pixel group. Further, the pixels included in the first pixel group and the pixels included in the second pixel group are also randomly disposed in the single regions L1 and L2, as shown by the pattern Pxl. That is, in the example of FIG. 8, in the pattern Pxl of the virtual grouping, the pixels included in the first pixel group and the pixels included in the second pixel group are randomly disposed, regardless of whether the region is the single region or the mixed region.

Incidentally, it is not realistic to create the dither mask DM having a large size corresponding to the total number of pixels of the output image. For this reason, it is common to create the dither mask DM having a relatively small size and perform the halftone processing on the image data as the dither mask DM is shifted in the Y direction (main scanning direction) and the X direction (sub-scanning direction). When a size of the dither mask DM in the Y direction is set to an appropriate size such as a power of 2 as in the related art, a positional relationship between each of a plurality of mixed regions and the dither mask DM is different from each other, and a deviation occurs in a positional relationship between the dither mask DM and each corresponding pixel for each mixed region, and thus the deterioration of the quality of the output image may not be sufficiently suppressed.

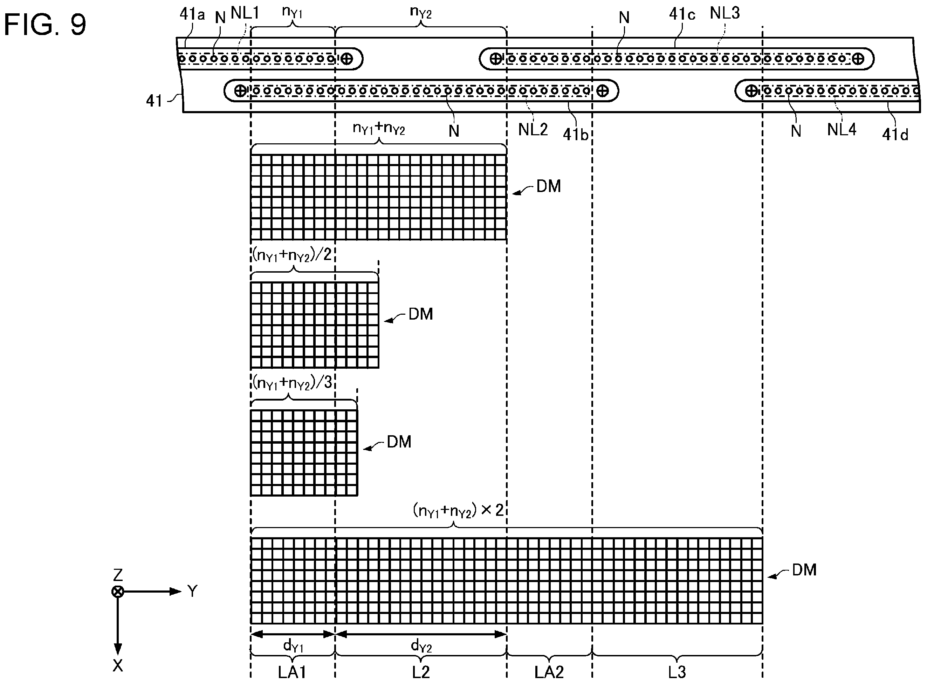

In the present embodiment, the number of elements of the dither mask DM in the Y direction is set to a predetermined value according to a length of the single region in the Y direction and a length of the mixed region in the Y direction such that the deviation does not occur in the positional relationship between the dither mask DM and each corresponding pixel for each mixed region. FIG. 9 shows an example of a relationship that a length of the dither mask DM in the Y direction and the lengths of the single region and the mixed region in the Y direction are required to satisfy.

As shown in FIG. 9, the mixed region LA1 is a region in which the plurality of dots are formed by the ink (liquid) discharged from at least a part of the plurality of nozzles N included in the rear end portion (right end portion) of the first nozzle row NL1 of the first head 41a and the ink (liquid) discharged from at least a part of the plurality of nozzles N included in the front end portion (left end portion) of the second nozzle row NL2 of the second head 41b. Further, the single region L2 is a region in which the plurality of dots are formed by the ink (liquid) discharged from the plurality of nozzles N included between the front end portion (left end portion) and the rear end portion (right end portion) of the second nozzle row NL2. In this case, when a length of the mixed region LA1 in the Y direction is defined as a first length d_{Y1} and a length of the single region L2 is defined as a second length d_{Y2}, the number of elements of the dither mask DM in the Y direction is N times or 1/N times (N is natural number) a total number n_{Y1} + n_{Y2} of the number of pixels n_{Y1} corresponding to the first length d_{Y1} and the number of pixels n_{Y2} corresponding to the second length d_{Y2}.

In the example of FIG. 9, since n_{Y1} = 8 and n_{Y2} = 16, the number of elements of the dither mask DM in the Y direction is N times or 1/N times 24. As shown in FIG. 9, for example, the number of elements of the dither mask DM in the Y direction may be 1 times, 1/2 times, 1/3 times, 2 times, or the like n_{Y1} + n_{Y2}. For example, when the number of elements of the dither mask DM in the Y direction is 1 times, 1/2 times, or 1/3 times n_{Y1} + n_{Y2}, the positional relationship between the dither mask DM and each corresponding pixel is the same for the mixed regions LA1 and LA2, and thus the quality of the output image is not deteriorated with the employment of the dither mask DM optimized for the mixed regions LA1 and LA2. When the number of elements of the dither mask DM in the Y direction is 2 times n_{Y1} + n_{Y2}, the positional relationship between the dither mask DM and each corresponding pixel is different for the mixed regions LA1 and LA2, but the quality of the output image is not deteriorated with the employment of the dither mask DM1 optimized for each of the mixed regions LA1 and LA2. 1-4. Actions and Effects

As described above, in the printing apparatus 1 according to the first embodiment, all the pixels included in the output image are virtually divided into the first pixel group and the second pixel group, and there is no correlation, in terms of the dispersibility, between the characteristics of the distribution of the pixels in which the dots are formed in the first pixel group and the characteristics of the distribution of the pixels in which the dots are formed in the second pixel group. In the mixed region in which the dots are formed by the two heads, each pixel in which the dot is formed by one head is included in the first pixel group, and each pixel in which the dot is formed by the other head is included in the second pixel group. Thus, even when the dot formation positions deviate, the graininess reduction or density variation is suppressed, and thus the quality of the output image can be improved. On the other hand, in the single region in which the dots are formed by one head, the dot formation positions do not deviate, but the image quality of the single region is slightly deteriorated by the division of the plurality of pixels included in the single region into the first pixel group and the second pixel group by half. As a result, the difference in the graininess or density between the single region and the mixed region is reduced.

Further, in the printing apparatus 1 according to the first embodiment, the number of elements of the dither mask DM in the main scanning direction (Y direction) is N times or 1/N times the total number of the number of pixels corresponding to the length of the mixed region in the main scanning direction and the number of pixels corresponding to the length of the single region in the main scanning direction. Thus, even when the dither mask DM is repeatedly used in the main scanning direction in the halftone processing, the relative positional relationship between each mixed region and the dither mask DM does not change. Therefore, with the printing apparatus 1 according to the first embodiment, the effect expected from the dither mask DM is exhibited in the image subjected to the halftone processing, and thus the quality of the output image is less likely to deteriorate.

In the printing apparatus 1 according to the first embodiment, the plurality of pixels constituting the output image are divided into the first pixel group and the second pixel group, and the distribution of the pixels in which the dots are formed in the first pixel group and the distribution of the pixels in which the dots are formed in the second pixel group have the blue noise characteristics or the green noise characteristics, respectively. Thus, the dispersibility of the dots in the output image can be enhanced in the frequency region with high sensitivity of the human eye. Thus, with the printing apparatus 1 according to the first embodiment, the graininess reduction in the output image is suppressed, and thus the quality of the image can be improved.

### 2. Second Embodiment

Hereinafter, the same reference numerals will be assigned to components of a second embodiment similar to the first embodiment, the description overlapping with the first embodiment will be omitted or simplified, and contents different from the first embodiment will be mainly described.

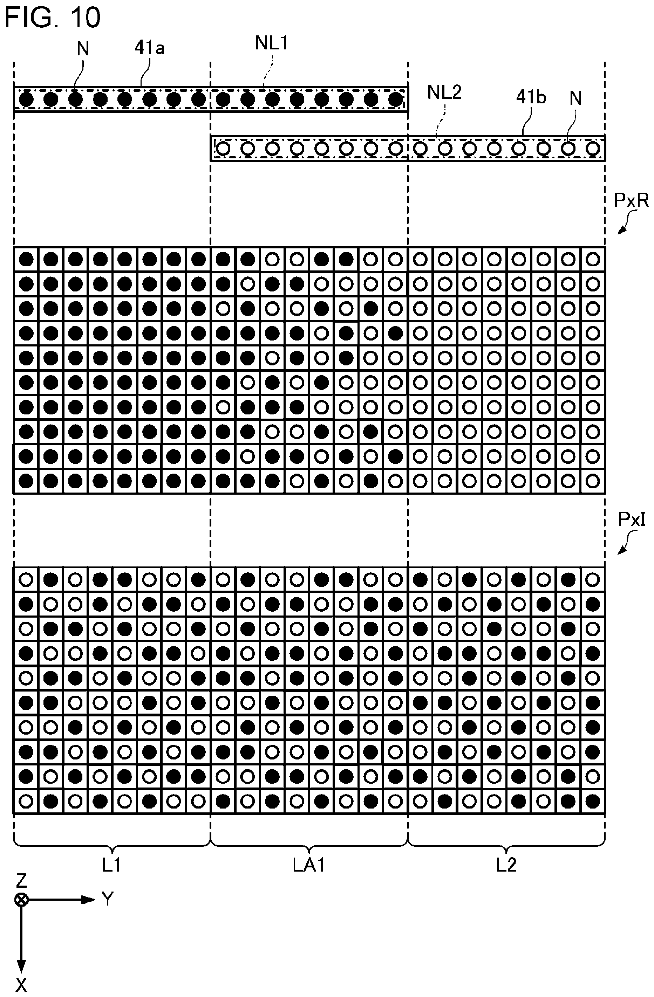

In the second embodiment, the pattern of the actual grouping is a pattern in which a ratio of the number of pixels in which the dots are formed by one head to the number of pixels in which the dots are formed by the other head, in each column of the mixed region, is gradually decreased or gradually increased in the main scanning direction (Y direction). FIG. 10 shows an example of the pattern of the actual grouping in the second embodiment. In FIG. 10, the same reference numerals are assigned to the same elements as in FIG. 8.

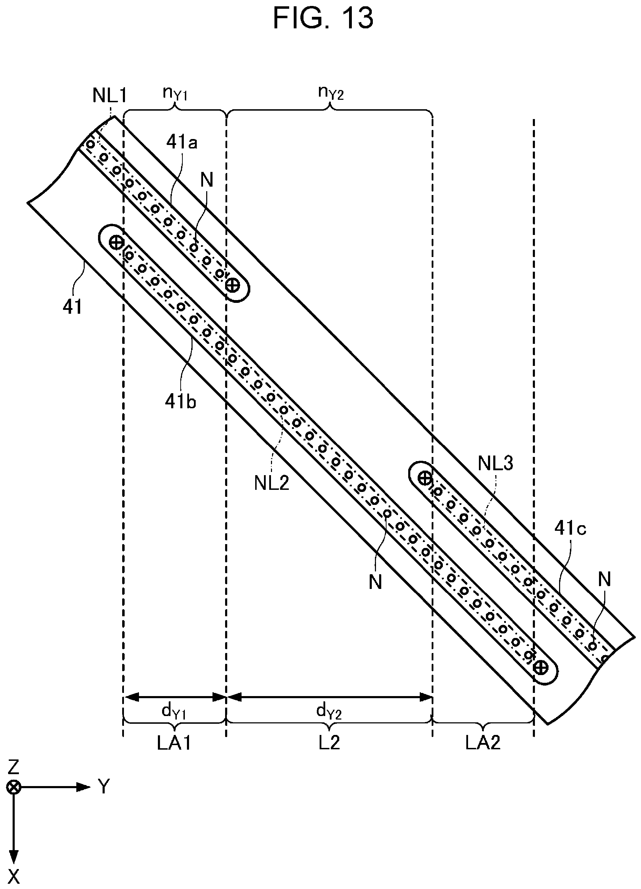

For example, in an example of FIG. 13, in the pattern PxR of the actual grouping, in each pixel column (each column) in which the plurality of pixels are arranged in the X direction in the mixed region LA1, the number of pixels in which the dots are formed by the first head 41a is gradually increased in the +Y direction, and the number of pixels in which the dots are formed by the second head 41b is gradually decreased in the +Y direction. On the other hand, the pattern Pxl of the virtual grouping is a random pattern, and the number of pixels in the first pixel group and the number of pixels in the second pixel group, in each column of the mixed region LA1, are the same or different by 2. For this reason, for each column in the mixed region LA1, when the number of pixels in which the dots are formed by the first head 41a is smaller than the number of pixels in the first pixel group, each pixel in which the dots are formed by the first head 41a is included in the first pixel group. In such a column, the number of pixels in which the dots are formed by the second head 41b is larger than the number of pixels in the second pixel group, and thus each pixel in which the dots are formed by the second head 41b is included in the first pixel group or the second pixel group. Similarly, for each column in the mixed region LA1, when the number of pixels in which the dots are formed by the second head 41b is smaller than the number of pixels in the second pixel group, each pixel in which the dots are formed by the second head 41b is included in the second pixel group. In such a column, the number of pixels in which the dots are formed by the first head 41a is larger than the number of pixels in the first pixel group, and thus each pixel in which the dots are formed by the first head 41a is included in the first pixel group or the second pixel group.

In the example of FIG. 10, in the column at one end portion of the mixed region LA1 close to the single region L1, the ratio of the pixels in which the dots are formed by the first head 41a is close to 100%, and the ratio of the pixels in which the dots are formed by the second head 41b is close to 0%. On the other hand, in the column at the other end portion of the mixed region LA1 close to the single region L2, the ratio of the pixels in which the dots are formed by the first head 41a is close to 0%, and the ratio of the pixels in which the dots are formed by the second head 41b is close to 100%. Therefore, a boundary between the mixed region LA1 and the single regions L1 and L2 becomes unclear and is difficult to be visually recognized in the output image, and thus the image quality of the output image is improved.

With the printing apparatus 1 according to the second embodiment described above, the same effects as those of the first embodiment can be obtained.

### 3. Third Embodiment

Hereinafter, the same reference numerals will be assigned to components of a third embodiment similar to the first embodiment or the second embodiment, the description overlapping with the first embodiment or the second embodiment will be omitted or simplified, and contents different from the first embodiment and the second embodiment will be mainly described.

As described above, the deviation Δd in the disposition between the nozzles of the plurality of heads may be several times larger than the nozzle pitch pt. However, even in such a case, a surplus nozzle is provided for each head such that the dots of some pixels of the output image are not missing in the present embodiment.

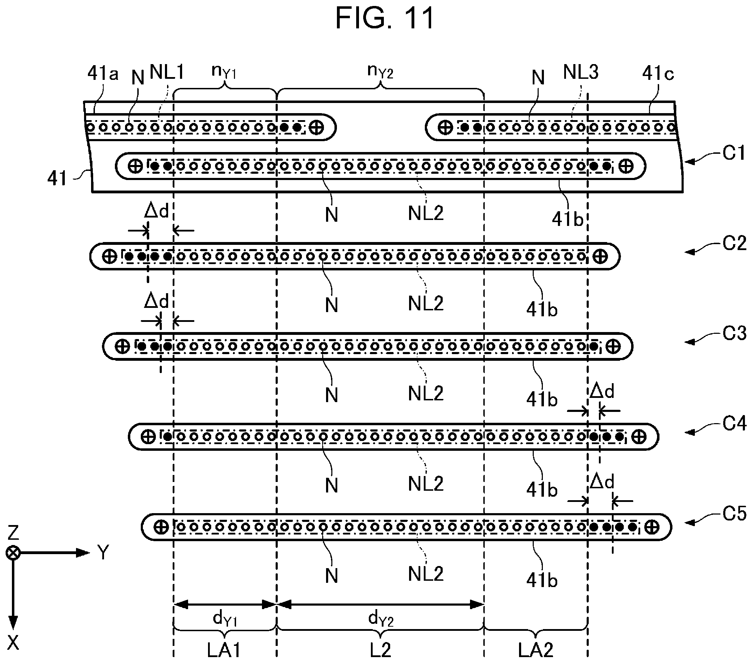

For example, as shown in FIG. 11, the second nozzle row NL2 of the first head 41a, the second nozzle row NL2 of the second head 41b, and the third nozzle row NL3 of the third head 41c each include 36 nozzles N. However, 32 nozzles N thereof are actual use nozzles used for the dot formation, and remaining four nozzles N are surplus nozzles not used for the dot formation. The liquid is discharged from the 32 actual use nozzles, but the liquid is not discharged from the four surplus nozzles.

FIG. 11 shows a relationship between the deviation Δd in the disposition of the second head 41b with respect to the first head 41a and the third head 41c and the actual use nozzle and the surplus nozzle, assuming that there is no positional deviation in the first head 41a and the third head 41c. In FIG. 11, the actual use nozzles from which the liquid is discharged are indicated by white circles, and the surplus nozzles from which the liquid is not discharged are indicated by black circles. The first nozzle row NL1 and the third nozzle row NL3 each have two surplus nozzles N at both ends, and the other 32 nozzles N are the actual use nozzles.

In FIG. 11, C1 corresponds to a case where there is no deviation in the second head 41b. In this case, the second nozzle row NL2 has two surplus nozzles N at both ends, and the other 32 nozzles N are the actual use nozzles. C2 corresponds to a case where the disposition of the second head 41b deviates by two nozzles in the -Y direction. In this case, the second nozzle row NL2 has four surplus nozzles N at a left end, and the other 32 nozzles N are the actual use nozzles. C3 corresponds to a case where the disposition of the second head 41b deviates by one nozzle in the -Y direction. In this case, the second nozzle row NL2 has three nozzles N at the left end and one nozzle N at a right end as the surplus nozzles, and the other 32 nozzles N are the actual use nozzles. C4 corresponds to a case where the disposition of the second head 41b deviates by one nozzle in the +Y direction. In this case, the second nozzle row NL2 has one nozzle N at the left end and three nozzles N at the right end as the surplus nozzles, and the other 32 nozzles N are the actual use nozzles. C5 corresponds to a case where the disposition of the second head 41b deviates by two nozzles in the +Y direction. In this case, the second nozzle row NL2 has four surplus nozzles N at the right end, and the other 32 nozzles N are the actual use nozzles.

In any of the cases of C1 to C5, the second nozzle row NL2 includes, at least one of the front end portion or the rear end portion, the surplus nozzles from which the liquid is not discharged. Among the 32 actual use nozzles of the second nozzle row NL2, eight nozzles N from the left end are responsible for the dot formation in the mixed region LA1, eight nozzles N from the right end are responsible for the dot formation in the mixed region LA2, and remaining 16 nozzles N are responsible for the dot formation in the single region L2.

Therefore, the mixed region LA1 is a region in which the plurality of dots are formed by the ink (liquid) discharged from eight actual use nozzles, which are at least a part of the plurality of nozzles N included in the rear end portion (right end portion) of the first nozzle row NL1, and the ink (liquid) discharged from eight actual use nozzles, which are at least a part of the plurality of nozzles N included in the front end portion (left end portion) of the second nozzle row NL2. Further, the single region L2 is a region in which the plurality of dots are formed by the ink (liquid) discharged from 16 actual use nozzles, which are the plurality of nozzles N included between the front end portion (left end portion) and the rear end portion (right end portion) of the second nozzle row NL2. When the length of the mixed region LA1 in the Y direction is set to the first length d_{Y1} and the length of the single region L2 is set to the second length d_{Y2}, the number of elements of the dither mask DM in the Y direction is also set to N times or 1/N times (N is natural number) the total number n_{Y1} + n_{Y2} of the number of pixels n_{Y1} corresponding to the first length d_{Y1} and the number of pixels n_{Y2} corresponding to the second length d_{Y2}, in the third embodiment as in the first embodiment.

With the printing apparatus 1 according to the third embodiment described above, since each head has the surplus nozzle, in the mixed region in which the dots are formed by the two heads, even when the deviation on the disposition between the nozzles N of the two heads is larger than the nozzle pitch, the dots of the output image can be prevented from being missing. With the printing apparatus 1 according to the third embodiment, the same effects as those of the first embodiment or the second embodiment can be obtained.

### 4. Modification Examples

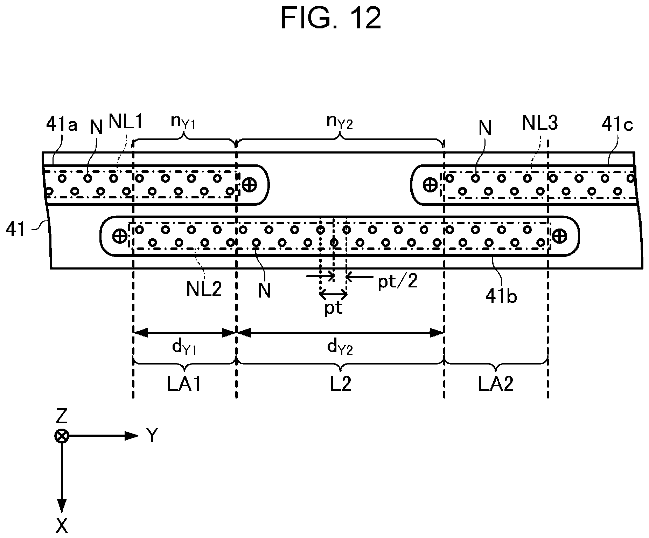

In each of the above embodiments, the nozzle rows included in each head are configured such that the plurality of nozzles N are arranged in a row in the Y direction (main scanning direction), but the nozzle rows included may be configured such that the plurality of nozzles N are arranged in two rows in the Y direction. For example, an example shown in FIG. 12 shows a configuration in which 32 nozzles N of each of the first nozzle row NL1, the second nozzle row NL2, and the third nozzle row NL3 are arranged in two rows of 16 nozzles N in the Y direction. In this case, each of the first nozzle row NL1, the second nozzle row NL2, and the third nozzle row NL3 may be configured in a so-called staggered disposition in which the 16 nozzles N included in one row are shifted by half the nozzle pitch pt with respect to the 16 nozzles N included in the other row. In this case, the mixed region LA1 is a region in which the plurality of dots are formed by the ink (liquid) discharged from the eight nozzles N (four nozzles × two rows) included in the rear end portion (right end portion) of the first nozzle row NL1 and the ink (liquid) discharged from the eight nozzles N (four nozzles × two rows) included in the front end portion (left end portion) of the second nozzle row NL2. Further, the single region L2 is a region in which the plurality of dots are formed by the ink (liquid) discharged from the 16 nozzles N (eight nozzles × two rows) included between the front end portion (left end portion) and the rear end portion (right end portion) of the second nozzle row NL2.

Further, the nozzle rows included in each head may be configured such that the plurality of nozzles N are arranged in an oblique direction with respect to the Y direction (main scanning direction). For example, an example shown in FIG. 13 shows a configuration in which 32 nozzles N of each of the first nozzle row NL1, the second nozzle row NL2, and the third nozzle row NL3 are arranged in a row in a direction inclined by 45° with respect to the Y direction. In this case, the mixed region LA1 is a region in which the plurality of dots are formed by the ink (liquid) discharged from the eight nozzles N included in the rear end portion (right end portion) of the first nozzle row NL1 and the ink (liquid) discharged from the eight nozzles N included in the front end portion (left end portion) of the second nozzle row NL2. Further, the single region L2 is a region in which the plurality of dots are formed by the ink (liquid) discharged from the 16 nozzles N included between the front end portion (left end portion) and the rear end portion (right end portion) of the second nozzle row NL2.

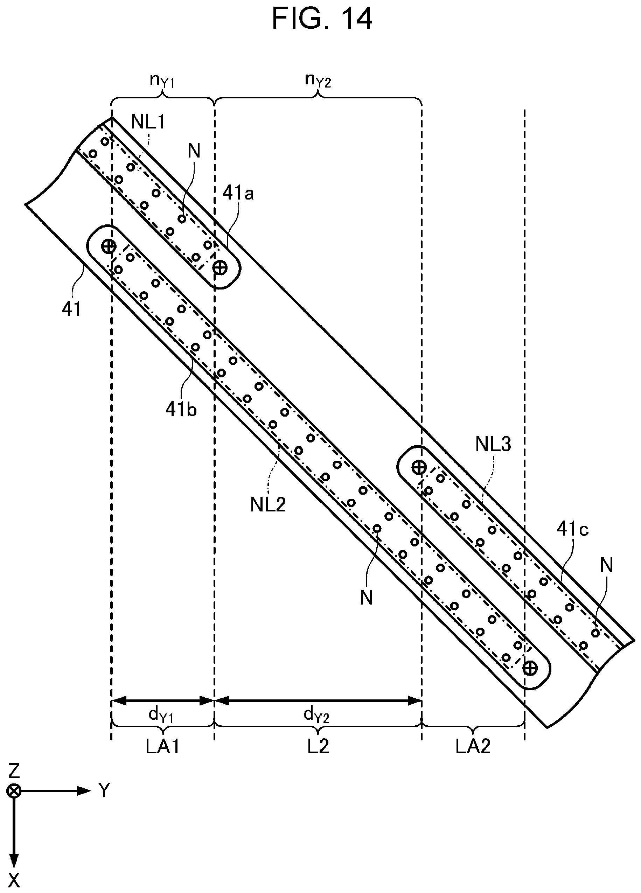

Furthermore, the nozzle rows included in each head may be configured such that the plurality of nozzles N are arranged in two rows in an oblique direction with respect to the Y direction (main scanning direction). For example, an example shown in FIG. 14 shows a configuration in which 32 nozzles N of each of the first nozzle row NL1, the second nozzle row NL2, and the third nozzle row NL3 are arranged in two rows of 16 nozzles N in a direction inclined by 45° with respect to the Y direction. In this case, the mixed region LA1 is a region in which the plurality of dots are formed by the ink (liquid) discharged from the eight nozzles N (four nozzles × two rows) included in the rear end portion (right end portion) of the first nozzle row NL1 and the ink (liquid) discharged from the eight nozzles N (four nozzles × two rows) included in the front end portion (left end portion) of the second nozzle row NL2. Further, the single region L2 is a region in which the plurality of dots are formed by the ink (liquid) discharged from the 16 nozzles N (eight nozzles × two rows) included between the front end portion (left end portion) and the rear end portion (right end portion) of the second nozzle row NL2.

In any of the examples of FIGS. 12, 13, and 14, when the length of the mixed region LA1 in the Y direction is set to the first length d_{Y1} and the length of the single region L2 is set to the second length d_{Y2}, the number of elements of the dither mask DM in the Y direction is set to N times or 1/N times (N is natural number) the total number n_{Y1} + n_{Y2} of the number of pixels n_{Y1} corresponding to the first length d_{Y1} and the number of pixels n_{Y2} corresponding to the second length d_{Y2}. With the printing apparatus 1 according to the modification examples, the same effects as those of the above embodiments can be obtained.

Further, in the printing apparatus 1 according to each of the above embodiments, a part of the configuration formed by hardware may be replaced with software (computer program), or at least a part of the configuration realized by software may be replaced with hardware. The software (computer program) may be stored in a computer-readable information storage medium. The information storage medium may be a storage device such as a flexible disk, a CD-ROM, various RAMs or ROMs, and a hard disk.

The present disclosure includes substantially the same configurations as the configurations described in the present embodiment, for example, configurations having the same functions, methods, and results, or configurations having the same objects and effects. Further, the present disclosure includes configurations in which non-essential parts of the configuration described in the present embodiment are replaced. Further, the present disclosure includes configurations that achieve the same actions and effects or configurations that can achieve the same objects as those of the configurations described in the present embodiment. Further, the present disclosure includes configurations in which a known technique is added to the configurations described in the present embodiment.

The embodiments and the modification examples described above are merely examples, and the present disclosure is not limited thereto. For example, each embodiment and each modification example can be combined as appropriate.

The following contents are derived from the above embodiments and modification examples.

According to an aspect of the present disclosure,
there is provided a printing apparatus that forms an output image corresponding to an original image on a medium, the printing apparatus including:
a halftone processing section that uses a dither mask to determine whether or not to form a dot in each of a plurality of pixels constituting the output image based on an input gradation value of the original image; and
a head unit that includes a plurality of heads including a first head, a second head, and a third head, and causes the plurality of heads to discharge a liquid based on a processing result of the halftone processing section to form the output image on the medium, in which
a direction in which the plurality of heads discharge the liquid to the medium is set as a first direction,
a direction in which the medium is transported and that is orthogonal to the first direction is set as a second direction,
a direction orthogonal to the first direction and the second direction is set as a third direction,
the plurality of heads are disposed side by side in the third direction in order from the first head,
a plurality of nozzles included in a rear end portion of a first nozzle row included in the first head overlap with a plurality of nozzles included in a front end portion of a second nozzle row included in the second head when viewed from the second direction,
a plurality of nozzles included in a rear end portion of the second nozzle row overlap with a plurality of nozzles included in a front end portion of a third nozzle row included in the third head when viewed from the second direction,
the output image includes
   a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and
   a single region in which a plurality of dots are formed by the liquid discharged from a plurality of nozzles included between the front end portion and the rear end portion of the second nozzle row,
a length of the mixed region in the third direction is a first length,
a length of the single region in the third direction is a second length, and
the number of elements of the dither mask in the third direction is N times or 1/N times a total number of the number of pixels corresponding to the first length and the number of pixels corresponding to the second length, where N is a natural number.

In the printing apparatus, the number of elements of the dither mask in the third direction is N times or 1/N times the total number of the number of pixels corresponding to the length of the mixed region in the third direction and the number of pixels corresponding to the length of the single region in the third direction. Thus, even when the dither mask is repeatedly used in the third direction in the halftone processing, the relative positional relationship between each mixed region and the dither mask does not change. Therefore, with the printing apparatus, the effect expected from the dither mask is exhibited in the image subjected to the halftone processing, and thus the quality of the output image is less likely to deteriorate.

According to an aspect of the printing apparatus,
the plurality of pixels constituting the output image may be divided into a first pixel group and a second pixel group,
a distribution of pixels in which dots are formed in the first pixel group may have blue noise characteristics or green noise characteristics, and
a distribution of pixels in which dots are formed in the second pixel group may have the blue noise characteristics or the green noise characteristics.

In the printing apparatus, the plurality of pixels constituting the output image are divided into the first pixel group and the second pixel group, and the distribution of the pixels in which the dots are formed in the first pixel group and the distribution of the pixels in which the dots are formed in the second pixel group have the blue noise characteristics or the green noise characteristics, respectively. Thus, the dispersibility of the dots in the output image can be enhanced in the frequency region with high sensitivity of the human eye. Therefore, with the printing apparatus, the graininess reduction in the output image is suppressed, and thus the quality of the image can be improved.

According to an aspect of the printing apparatus,
the plurality of pixels constituting the output image may be divided into a first pixel group and a second pixel group, and
when a separation distance between a first pixel selected from the first pixel group and a second pixel selected from the second pixel group is equal to or less than at least an assumed deviation amount between the first pixel group and the second pixel group, a probability that dots are simultaneously formed in a pair of the first pixel and the second pixel may be approximated to a value determined in correspondence with a square of the input gradation value.

With the printing apparatus, even when there is a difference in the deviation between the formation positions of the dots formed corresponding to the first pixel group and the dots formed corresponding to the second pixel group in at least a part of the output image, the variation in the overlapping of the formed dots is suppressed, and thus a difference in density unevenness of the image is suppressed.

According to an aspect of the printing apparatus,
the second nozzle row may include a nozzle from which the liquid is not discharged to at least one of the front end portion and the rear end portion.

With the printing apparatus, even when the deviation on the disposition between the nozzles of the first head and the nozzles of the second head or the deviation on the disposition between the nozzles of the second head and the nozzles of the third head is larger than the nozzle pitch, the dots of the output image can be prevented from being missing.

According to an aspect of the printing apparatus,
the head unit may be a line head.

According to an aspect of the printing apparatus,
the plurality of pixels constituting the output image may be divided into a first pixel group and a second pixel group,
for each pixel column in which a plurality of pixels are arranged in the second direction in the mixed region,
when the number of pixels in which dots are formed by the first head is smaller than the number of pixels in the first pixel group, respective pixels in which the dots are formed by the first head may be included in the first pixel group, and
when the number of pixels in which dots are formed by the second head is smaller than the number of pixels in the second pixel group, respective pixels in which the dots are formed by the second head may be included in the second pixel group.

With the printing apparatus, in each pixel column of the mixed region, a ratio of the pixels in which the dots are formed by the second head included in the first pixel group or a ratio of the pixels in which the dots are formed by the first head included in the second pixel group is reduced. Therefore, the effect expected from the dither mask is easily exhibited in the image subjected to the halftone processing, and the quality of the output image is less likely to deteriorate.

According to another aspect of the present disclosure,
there is provided a printing method of forming an output image corresponding to an original image on a medium, the printing method including:
performing halftone processing of using a dither mask to determine whether or not to form a dot in each of a plurality of pixels constituting the output image based on an input gradation value of the original image; and
causing a plurality of heads including a first head, a second head, and a third head to discharge a liquid based on a result of the halftone processing to form the output image on the medium, in which
a direction in which the plurality of heads discharge the liquid to the medium is set as a first direction,
a direction in which the medium is transported and that is orthogonal to the first direction is set as a second direction,
a direction orthogonal to the first direction and the second direction is set as a third direction,
the plurality of heads are disposed side by side in the third direction,
a plurality of nozzles included in a rear end portion of a first nozzle row included in the first head overlap with a plurality of nozzles included in a front end portion of a second nozzle row included in the second head when viewed from the second direction,
a plurality of nozzles included in a rear end portion of the second nozzle row overlap with a plurality of nozzles included in a front end portion of a third nozzle row included in the third head when viewed from the second direction,
the output image includes
   a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and
   a single region in which a plurality of dots are formed by the liquid discharged from a plurality of nozzles included between the front end portion and the rear end portion of the second nozzle row,
a length of the mixed region in the third direction is a first length,
a length of the single region in the third direction is a second length, and
the number of elements of the dither mask in the third direction is N times or 1/N times a total number of the number of pixels corresponding to the first length and the number of pixels corresponding to the second length, where N is a natural number.

In this printing method, the number of elements of the dither mask in the third direction is N times or 1/N times the total number of the number of pixels corresponding to the length of the mixed region in the third direction and the number of pixels corresponding to the length of the single region in the third direction. Thus, even when the dither mask is repeatedly used in the third direction in the halftone processing, the relative positional relationship between each mixed region and the dither mask does not change. Therefore, according to the printing method, the effect expected from the dither mask is exhibited in the image subjected to the halftone processing, and thus the quality of the output image is less likely to deteriorate.

According to an aspect of the printing method,
the plurality of pixels constituting the output image may be divided into a first pixel group and a second pixel group,
a distribution of pixels in which dots are formed in the first pixel group may have blue noise characteristics or green noise characteristics, and
a distribution of pixels in which dots are formed in the second pixel group may have the blue noise characteristics or the green noise characteristics.

According to an aspect of the printing method,
the plurality of pixels constituting the output image may be divided into a first pixel group and a second pixel group, and
when a separation distance between a first pixel selected from the first pixel group and a second pixel selected from the second pixel group is equal to or less than at least an assumed deviation amount between the first pixel group and the second pixel group, a probability that dots are simultaneously formed in a pair of the first pixel and the second pixel may be approximated to a value determined in correspondence with a square of the input gradation value.

According to an aspect of the printing method,
the second nozzle row may include a nozzle from which the liquid is not discharged to at least one of the front end portion and the rear end portion.

According to an aspect of the printing method,
a head unit having the plurality of heads may be a line head.

According to an aspect of the printing method,
the plurality of pixels constituting the output image may be divided into a first pixel group and a second pixel group,
for each pixel column in which a plurality of pixels are arranged in the second direction in the mixed region,
when the number of pixels in which dots are formed by the first head is smaller than the number of pixels in the first pixel group, respective pixels in which the dots are formed by the first head may be included in the first pixel group, and
when the number of pixels in which dots are formed by the second head is smaller than the number of pixels in the second pixel group, respective pixels in which the dots are formed by the second head may be included in the second pixel group.

## Claims

1. A printing apparatus that forms an output image corresponding to an original image on a medium, the printing apparatus comprising:
a halftone processing section that uses a dither mask to determine whether or not to form a dot in each of a plurality of pixels constituting the output image based on an input gradation value of the original image; and
a head unit that includes a plurality of heads including a first head, a second head, and a third head, and causes the plurality of heads to discharge a liquid based on a processing result of the halftone processing section to form the output image on the medium, wherein
a direction in which the plurality of heads discharge the liquid to the medium is set as a first direction,
a direction in which the medium is transported and that is orthogonal to the first direction is set as a second direction,
a direction orthogonal to the first direction and the second direction is set as a third direction,
the plurality of heads are disposed side by side in the third direction in order from the first head,
a plurality of nozzles included in a rear end portion of a first nozzle row included in the first head overlap with a plurality of nozzles included in a front end portion of a second nozzle row included in the second head when viewed from the second direction,
a plurality of nozzles included in a rear end portion of the second nozzle row overlap with a plurality of nozzles included in a front end portion of a third nozzle row included in the third head when viewed from the second direction,
the output image includes
a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and
a single region in which a plurality of dots are formed by the liquid discharged from a plurality of nozzles included between the front end portion and the rear end portion of the second nozzle row,
a length of the mixed region in the third direction is a first length,
a length of the single region in the third direction is a second length, and
the number of elements of the dither mask in the third direction is N times or 1/N times a total number of the number of pixels corresponding to the first length and the number of pixels corresponding to the second length, where N is a natural number.

2. The printing apparatus according to claim 1, wherein
the plurality of pixels constituting the output image are divided into a first pixel group and a second pixel group,
a distribution of pixels in which dots are formed in the first pixel group has blue noise characteristics or green noise characteristics, and
a distribution of pixels in which dots are formed in the second pixel group has the blue noise characteristics or the green noise characteristics.

3. The printing apparatus according to claim 1, wherein
the plurality of pixels constituting the output image are divided into a first pixel group and a second pixel group, and
when a separation distance between a first pixel selected from the first pixel group and a second pixel selected from the second pixel group is equal to or less than at least an assumed deviation amount between the first pixel group and the second pixel group, a probability that dots are simultaneously formed in a pair of the first pixel and the second pixel is approximated to a value determined in correspondence with a square of the input gradation value.

4. The printing apparatus according to claim 1, wherein
the second nozzle row includes a nozzle from which the liquid is not discharged to at least one of the front end portion and the rear end portion.

5. The printing apparatus according to claim 1, wherein
the head unit is a line head.

6. The printing apparatus according to claim 1, wherein
the plurality of pixels constituting the output image are divided into a first pixel group and a second pixel group,
for each pixel column in which a plurality of pixels are arranged in the second direction in the mixed region,
when the number of pixels in which dots are formed by the first head is smaller than the number of pixels in the first pixel group, respective pixels in which the dots are formed by the first head are included in the first pixel group, and
when the number of pixels in which dots are formed by the second head is smaller than the number of pixels in the second pixel group, respective pixels in which the dots are formed by the second head are included in the second pixel group.

7. A printing method of forming an output image corresponding to an original image on a medium, the printing method comprising:
performing halftone processing of using a dither mask to determine whether or not to form a dot in each of a plurality of pixels constituting the output image based on an input gradation value of the original image; and
causing a plurality of heads including a first head, a second head, and a third head to discharge a liquid based on a result of the halftone processing to form the output image on the medium, wherein
a direction in which the plurality of heads discharge the liquid to the medium is set as a first direction,
a direction in which the medium is transported and that is orthogonal to the first direction is set as a second direction,
a direction orthogonal to the first direction and the second direction is set as a third direction,
the plurality of heads are disposed side by side in the third direction in order from the first head,
a plurality of nozzles included in a rear end portion of a first nozzle row included in the first head overlap with a plurality of nozzles included in a front end portion of a second nozzle row included in the second head when viewed from the second direction,
a plurality of nozzles included in a rear end portion of the second nozzle row overlap with a plurality of nozzles included in a front end portion of a third nozzle row included in the third head when viewed from the second direction,
the output image includes
a mixed region in which a plurality of dots are formed by the liquid discharged from at least a part of the plurality of nozzles included in the rear end portion of the first nozzle row and the liquid discharged from at least a part of the plurality of nozzles included in the front end portion of the second nozzle row, and
a single region in which a plurality of dots are formed by the liquid discharged from a plurality of nozzles included between the front end portion and the rear end portion of the second nozzle row,
a length of the mixed region in the third direction is a first length,
a length of the single region in the third direction is a second length, and
the number of elements of the dither mask in the third direction is N times or 1/N times a total number of the number of pixels corresponding to the first length and the number of pixels corresponding to the second length, where N is a natural number.

8. The printing method according to claim 7, wherein
the plurality of pixels constituting the output image are divided into a first pixel group and a second pixel group,
a distribution of pixels in which dots are formed in the first pixel group has blue noise characteristics or green noise characteristics, and
a distribution of pixels in which dots are formed in the second pixel group has the blue noise characteristics or the green noise characteristics.

9. The printing method according to claim 7, wherein
the plurality of pixels constituting the output image are divided into a first pixel group and a second pixel group, and
when a separation distance between a first pixel selected from the first pixel group and a second pixel selected from the second pixel group is equal to or less than at least an assumed deviation amount between the first pixel group and the second pixel group, a probability that dots are simultaneously formed in a pair of the first pixel and the second pixel is approximated to a value determined in correspondence with a square of the input gradation value.

10. The printing method according to claim 7, wherein
the second nozzle row includes a nozzle from which the liquid is not discharged to at least one of the front end portion and the rear end portion.

11. The printing method according to claim 7, wherein
a head unit having the plurality of heads is a line head.

12. The printing method according to claim 7, wherein
the plurality of pixels constituting the output image are divided into a first pixel group and a second pixel group,
for each pixel column in which a plurality of pixels are arranged in the second direction in the mixed region,
when the number of pixels in which dots are formed by the first head is smaller than the number of pixels in the first pixel group, respective pixels in which the dots are formed by the first head are included in the first pixel group, and
when the number of pixels in which dots are formed by the second head is smaller than the number of pixels in the second pixel group, respective pixels in which the dots are formed by the second head are included in the second pixel group.
